# DEMANDE DE BREVET EUROPEEN

(11) **EP 2 008 835 A1**
(43) Date de publication de la demande: **31.12.2008**
(21) Numéro de dépôt: 08010801.2
(22) Date de dépôt: 13.06.2008
(51) Int. Cl.: B60B 1/00, B60B 1/04

(54) **Roue à rayon démontable en matériau composite**

(30) Priorité: 25.06.2007 FR 0704547
(71) Demandeur: Salomon S.A., 74370 Metz-Tessy (FR)
(72) Inventeur: Taieb, Karim, 74150 Rumilly (FR); Saillet, Benoît, 73410 Albens (FR); Renard, Philippe, 73100 Aix les Bains (FR)

(57) **Abrégé**

L'invention comprend une roue comportant une jante (3), un moyeu (5), au moins un rayon (7) reliant la jante au moyeu, le rayon étant en matériau composite.

La roue est caractérisée en ce que chaque rayon (7) comprend un dispositif (13) permettant une liaison réversible avec le moyeu (5) d'une roue (1), le dispositif de liaison (13) étant incorporé au moins partiellement à l'intérieur du rayon (7) par surmoulage.

## Description

L'invention se rapporte au domaine des roues à rayons en matériau composite. De tels rayons présentent l'avantage d'être plus légers et plus résistants en comparaison avec les rayons plus classiques réalisés en métal.

En revanche, les rayons en matériau composite ont l'inconvénient d'une fixation au moyeu et à la jante qui est plus compliquée, dû à la nature des matériaux composites. En effet, en prenant l'exemple d'un rayon en matériau composite sous forme de fibres de carbone noyées dans une matrice résineuse, on constate qu'un tel rayon fibreux ne se prête pas aux simples opérations de filetage et de déformations applicables à un rayon en métal pour rendre ses extrémités rattachables au moyeu ainsi qu'à la jante.

Une solution connue de fixation d'un rayon en matière composite à la jante consiste à solidariser le rayon avec la jante en leur appliquant un processus de moulage commun. L'inconvénient de ce procédé d'assemblage du rayon et de la jante apparaît lors de la casse du rayon, par exemple par fatigue. La roue ne peut alors être réparée puisque le rayon a été fixé de manière irréversible à la jante lors du moulage. Il faut ainsi remplacer la roue entière, ce qui coûte fort cher.

Le document FR 2 707 559 A1 décrit un rayon en métal ou matériau composite relié au moyeu par son extrémité interne de façon amovible. La liaison est assurée par une pièce d'extrémité filetée comprenant deux parois parallèles définissant une chape formant un logement central dans lequel est engagée et brasée, collée ou soudée l'extrémité correspondante du rayon afin de solidariser ladite pièce d'extrémité au rayon.

L'utilisation d'une telle pièce d'extrémité pour la liaison permet de rendre le rayon amovible vis-à-vis du moyeu. En revanche, cette solution n'est pas satisfaisante dans la mesure où la zone d'attache entre la pièce d'extrémité et le reste du rayon représente une zone de faiblesse. En effet, lors de son utilisation, le rayon est sollicité en traction, ce qui tend à séparer la pièce d'extrémité du reste du rayon. Le collage fixant la pièce d'extrémité au reste du rayon doit être de très bonne qualité pour éviter une rupture du rayon, ce qui n'est pas toujours le cas.

Par conséquent, l'objectif de l'invention est de proposer un rayon en matériau composite avec un dispositif permettant une liaison réversible entre un rayon en matériau composite et la roue (jante, moyeu) du type connue du document précité FR 2 707 559 A1.

Un autre objectif est d'améliorer la liaison notamment par rapport aux dispositifs de liaison déjà connus.

Un autre but de l'invention est de proposer un rayon dont la fabrication est simplifiée par rapport au rayon connu du document FR 2 707 559 A1. En effet, la solution selon ce document, avec une pièce d'extrémité, introduit une étape supplémentaire lors de la fabrication du rayon, à savoir l'étape de collage de la pièce d'extrémité au reste du rayon.

De façon plus générale, un autre but de l'invention est de réaliser un rayon en matériau composite qui puisse être aisément remplacé en cas de rupture lors de son utilisation au sein d'une roue.

Un but de l'invention est également de construire, à l'aide de rayons en matériau composite, une roue réglable et réparable.

Selon l'invention, les buts et objectifs ci-dessus sont atteints par une roue comportant au moins un rayon en matériau composite, caractérisée en ce que le rayon comprend un dispositif de liaison permettant une liaison réversible avec la roue, et en ce que ledit dispositif de liaison est incorporé au moins partiellement à l'intérieur du rayon par surmoulage.

Par liaison réversible on entend que le rayon peut être fixé à la roue (jante, moyeu) en étant facilement amovible ou détachable en cas de besoin. Ce besoin peut par exemple se présenter si le rayon subit une rupture et doit être remplacé.

Selon un mode de réalisation, le rayon est un rayon double, à savoir un rayon s'étendant sensiblement sur tout le diamètre d'une roue associée. Ainsi, le rayon selon l'invention est adapté à être fixé par ses deux extrémités à une jante de roue, tandis que sa partie centrale est adaptée à être fixée au moyeu. Le dispositif de liaison réversible peut donc être agencé au niveau de la partie centrale du rayon.

Le fait que le dispositif de liaison est incorporé au moins en partie par surmoulage dans le rayon rend la liaison entre ces deux éléments plus forte et plus fiable. En effet, le dispositif de liaison se trouve plus ou moins entouré ou encadré par le matériau composite ce qui maximise la surface de fixation entre le dispositif et le matériau.

Le dispositif est intégré dans le rayon lors du moulage de celui-ci. Le matériau composite et le dispositif de liaison au moins partiellement implanté dans celui-ci sont placés ensemble dans un moule pour être mis en forme et pour subir une élévation de température. Après l'opération de moulage, le dispositif de liaison est bien collé, au moins partiellement, à l'intérieur du rayon.

Dans un mode de réalisation, le dispositif de liaison est inséré et maintenu entre deux surfaces externes longitudinales du rayon. Ainsi, le dispositif de liaison peut être couvert par le rayon, soit par-dessus et par-dessous, soit par ses deux côtés, la couverture étant de préférence partielle, mais pouvant aussi être totale.

Selon un mode de réalisation, le dispositif de liaison est une plaquette insérée entre des couches composites du rayon.

De façon avantageuse, le rayon présente une superposition de deux couches composites sur une face de la plaquette. Cela réduit le risque de délaminage des deux couches lors du montage du rayon et donc le risque de casse, notamment en cas de flexion de celui-ci. Par ailleurs le recouvrement qui est nécessaire pour l'assemblage du rayon, est ainsi effectué dans la zone centrale (et de façon symétrique) du rayon, ce qui n'induit pas de balourd par rapport à la roue.

En outre, la plaquette peut comporter une gorge longitudinale pour le logement d'au moins une couche composite du rayon. Avantageusement, la surface de la ou des couches composites agencées dans la gorge affleure la surface extérieure de la plaquette.

Avec une plaquette à gorge et une superposition de deux couches composites, les deux couches composites superposées peuvent être logées dans une première gorge plus profonde de la plaquette définissant un logement adapté auxdites couches composites, une troisième couche composite pouvant être logée dans une seconde gorge moins profonde.

De façon avantageuse, les couches composites à proximité de la plaquette peuvent être entourées par un cerclage afin d'éviter leur délaminage.

Dans un mode de réalisation, le rayon présente une zone de transition entre la plaquette et les couches composites sous forme de matériau fondu.

De plus, la plaquette peut soit être plane, i.e. parallèpipédique, ou bien comporter deux parties, l'une étant inclinée d'un certain angle par rapport à l'autre, de façon à former une sorte de chevron.

On peut aussi ajouter une couche de décoration sur la plaquette recouvrant toute sa surface. Cette couche peut être d'une couleur assortie au moyeu.

De façon avantageuse, la plaquette a une forme elliptique et comporte un pion pour assurer la liaison avec le moyeu.

Dans un autre mode de réalisation, le dispositif de liaison peut être une goupille épaulée, au lieu d'une plaquette. De préférence, la goupille est apte à être logée dans un trou d'un flasque du moyeu.

Le dispositif de liaison peut aussi être un tube taraudé.

De plus, dans le cas d'un dispositif de liaison sous forme de plaquette à pion, goupille ou tube taraudé, il est préférable que ce dispositif soit incorporé de telle manière dans le rayon que les fibres du matériau composite l'enlacent ou l'entourent, c'est-à-dire que les fibres ne sont pas interrompues par le dispositif, mais uniquement déviées.

En outre, le dispositif de liaison peut présenter une surface rugueuse, obtenue de préférence par sablage, pour l'amélioration de l'accroche entre le dispositif et le rayon.

L'invention se rapporte aussi à une roue comportant au moins un rayon selon l'un quelconque des modes de réalisation précédents.

D'autres caractéristiques et avantages de l'invention seront mieux compris à l'aide de la description qui va suivre, en regard des dessins annexés illustrant, de façon non limitative, comment l'invention peut être réalisée, et dans lesquels :
La figure 1 est une vue d'ensemble d'un exemple d'une roue selon l'invention.
La figure 2 est une vue en détail de la roue selon la figure 1 montrant un exemple d'une première variante du dispositif selon l'invention permettant une liaison réversible entre les rayons et le moyeu de la roue dans le cas d'une plaquette en chevron.
Les figures 2a et 2b montrent différents exemples de réalisation de la plaquette de la figure 2.
Les figures 3a et 3b montrent les angles d'inclinaison des rayons de la roue selon la figure 1.
Les figures 4a à 4c montrent un autre exemple de la première variante du dispositif de liaison selon l'invention.
Les figures 5a, 5b, 5c montrent encore d'autres exemples de la première variante du dispositif de liaison selon l'invention.
La figure 6 montre un autre mode de réalisation du dispositif des figures 4a à 4c. Les figures 7a à 7c montrent une deuxième variante du dispositif de liaison selon l'invention.
Les figures 8a à 8c montrent une troisième variante du dispositif de liaison selon l'invention; et
Les figures 9a à 9d montrent une quatrième variante du dispositif de liaison selon l'invention.
La figure 10 montre un exemple de réalisation d'un rayon selon l'invention réalisé sous forme double.
La figure 11 est une vue d'un rayon selon l'invention réalisé sous forme simple.
Les figures 12 à 14 illustrent d'autres modes de réalisation des dispositifs de liaison destinés plus particulièrement à un ancrage du rayon au niveau de la jante.
La figure 15 est une vue en plan avec coupe partielle au niveau du pont inférieur d'une roue incorporant un rayon selon la figure 11.
La figure 16 est une vue en coupe selon XVI-XVI de la figure 15.

Dans la description suivante, le matériau utilisé pour les rayons est supposé être des fibres de carbone noyées dans une matrice de résine de polymère. Néanmoins, ceci n'est pas limitatif, et les rayons peuvent être réalisés à partir de tout autre matériau composite.

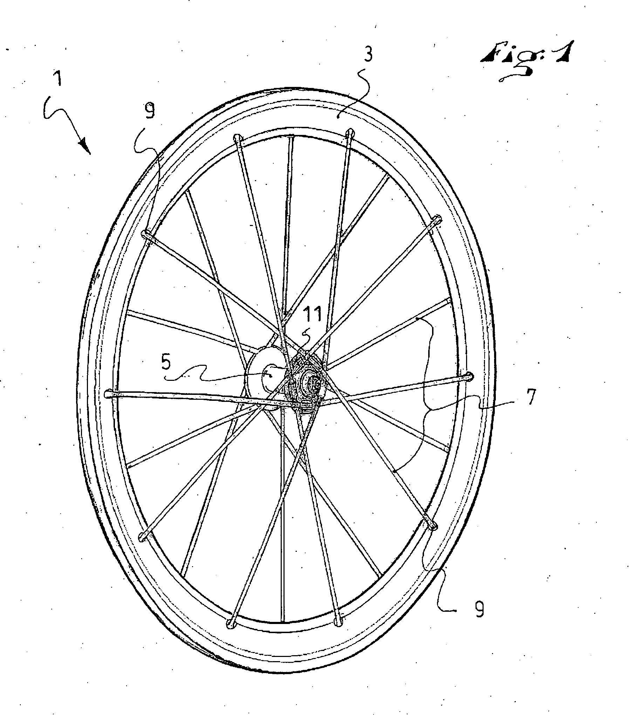

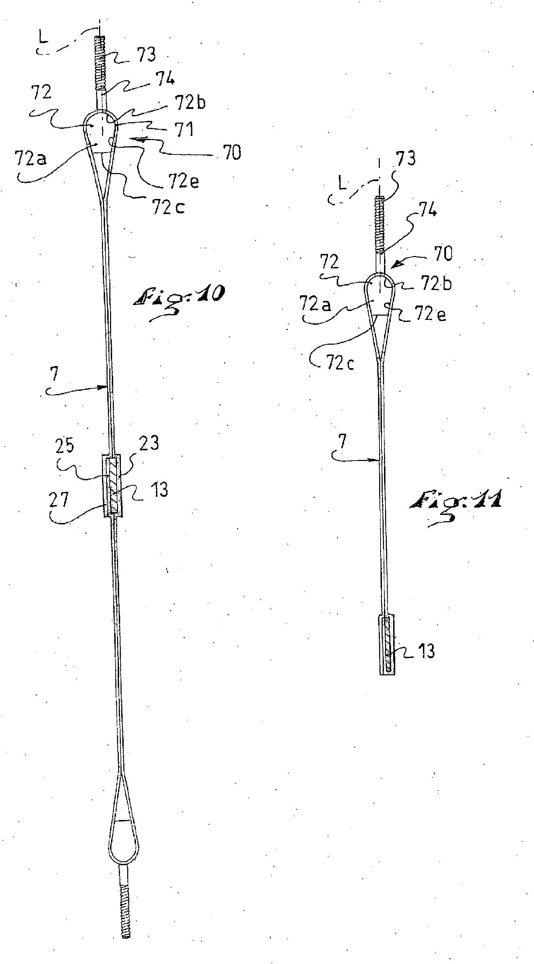

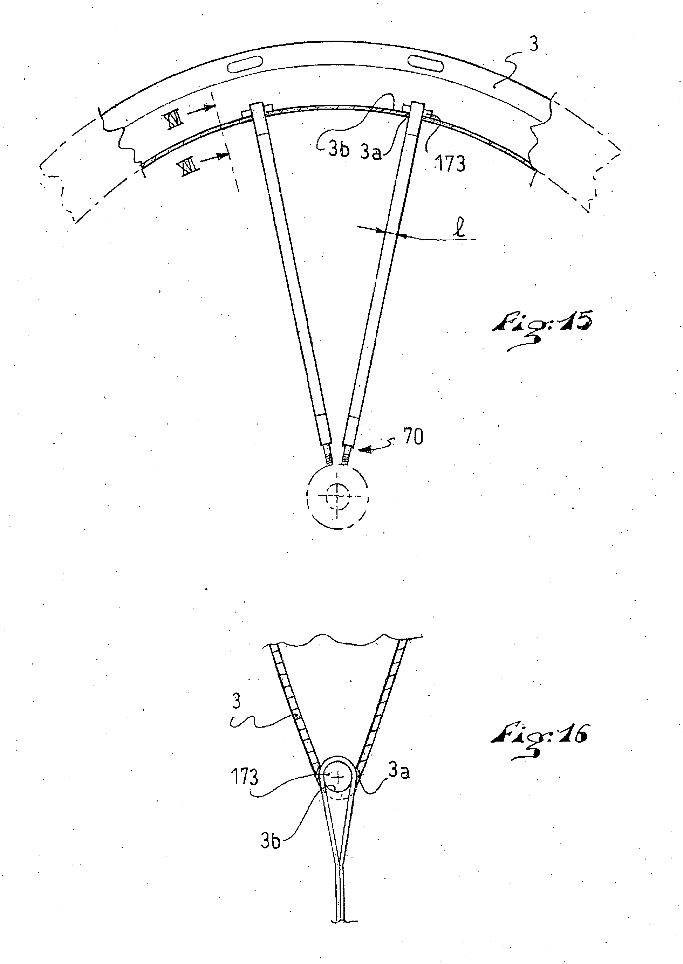

La figure 1 donne une vue d'ensemble d'une roue 1 à rayons selon l'invention. La roue 1 comprend une jante 3, un moyeu 5 et des rayons 7 reliant la jante au moyeu. Dans l'exemple représenté, les rayons 7 se présentent sous forme de rayons doubles, c'est-à-dire qu'ils s'étendent sensiblement sur tout le diamètre de la roue, chacune de leurs extrémités 9 étant liés à la jante 3, leur partie centrale 11 étant liée au moyeu 5. Il peut également s'agir de rayons simples comme on le verra plus tard en liaison avec les figures 11 et 15.

L'accrochage des rayons 7 au niveau de la jante 3 est réalisé de façon amovible et sera décrit plus particulièrement en liaison avec les figures 10 et 11.

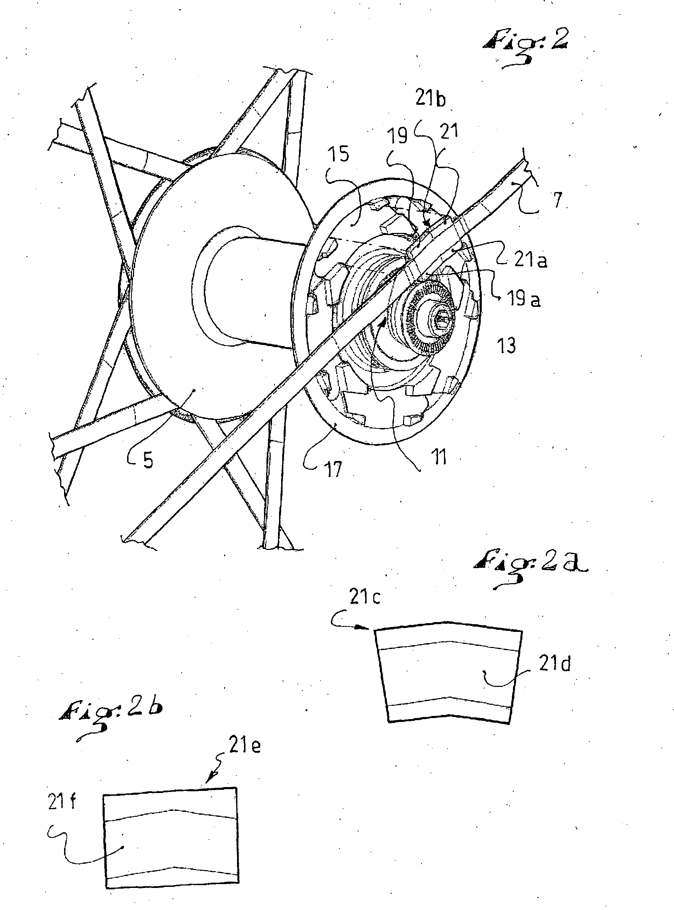

On va maintenant décrire les moyens d'accroche des rayons 7 au moyeu 5. La figure 2 montre en détail la partie centrale 11 d'un des rayons double 7. Dans la figure 2, on distingue clairement une première variante d'accroche réversible entre le moyeu 5 et le rayon 7, à savoir une plaquette 13 intégrée dans la partie centrale 11 du rayon 7 qui vient se loger dans un de plusieurs logements 15 de forme complémentaire à celle de la plaquette, en l'occurrence sensiblement rectangulaire, agencés dans le flasque 17 du moyeu 5, les logements formant des butées s'opposant à l'enlèvement de la plaquette notamment lorsque les rayons sont sous tension.

La plaquette 13 est sensiblement de forme rectangulaire ou parallépipédique et présente deux parties 19 et 21 sensiblement carrées dont les faces supérieures 19a, 21 a sont inclinées l'une par rapport à l'autre en formant une sorte de chevron, tandis que la face inférieure 21 b est commune et plane. Les deux parties 19, 21 peuvent être constituées par une seule et même pièce 21 c en forme de chevron ayant une rainure en chevron 21 d (cf. figure 2a) ou une pièce 21 e de forme rectangulaire ayant un tel usinage en chevron 21f (cf. figure 2b). Les rayons 7 sont encastrés dans les rainures 21d, 21f.

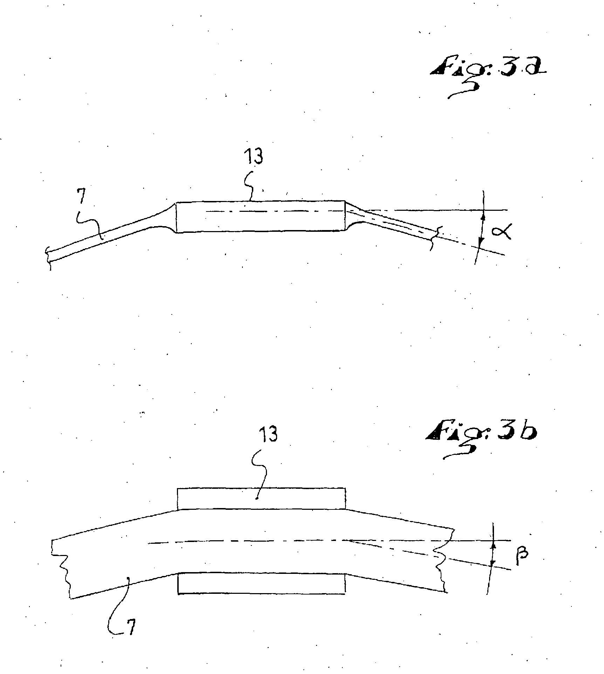

Les figures 3a et 3b représentent les deux angles d'inclinaison α et β des rayons 7. Les rayons 7 sont moulés selon ces deux angles, α correspondant à « l'angle de parapluie » par rapport au plan de la roue et β correspondant à l'angle de traction.

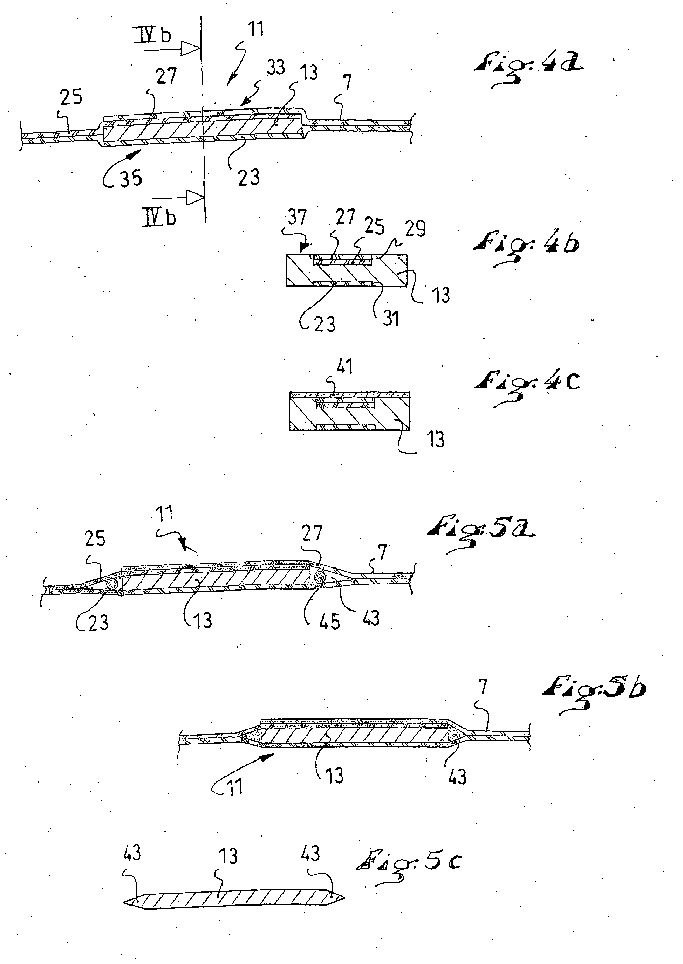

Les figures 4a à 4c montrent en détail une plaquette 13 selon un autre mode de réalisation. Cette plaquette 13 diffère en fait légèrement de la plaquette montrée à la figure 2, en ce qu'il s'agit d'une plaquette plane ne présentant pas d'inclinaison entre ses deux parties. La plaquette 13 est réalisée de telle manière qu'elle présente de grandes surfaces pour le collage avec le rayon 7.

La figure 4a est une vue en coupe longitudinale de la partie centrale 11 du rayon 7 au niveau de la plaquette. Le rayon 7 est constitué de trois couches en matériau composite 23, 25 et 27. La couche 23 enveloppe la plaquette 13 par-dessous d'une extrémité à l'autre du rayon 7, tandis que les couches 25 et 27 partent d'une extrémité du rayon 7, passent par-dessus la plaquette 13 et s'arrêtent chacune à l'une des deux extrémités de la plaquette 13. Ainsi, les couches 25 et 27 se superposent au niveau de la surface supérieure de la plaquette 13.

En référence à la figure 4a, on peut dire que la plaquette 13 est insérée et maintenue entre deux surfaces externes longitudinales 33, 35 du rayon 7.

La figure 4b est une vue en coupe transversale de la partie centrale 11 du rayon selon la ligne IVb - IVb de la figure 4a. A la figure 4b on distingue bien que les deux couches superposées 25 et 27 sont logées dans une première gorge ou rainure 29 longitudinale et débouchante ménagée sur une face de ladite plaquette 13. La couche 23 quant à elle se trouve dans une deuxième gorge 31 longitudinale et débouchante ménagée dans la face inférieure de ladite plaquette. Les gorges sont réalisées de telle manière que la surface des couches affleure celle de la plaquette. Par conséquent, la gorge 31 est moins profonde que la gorge 29. Les deux couches 25 et 27 sont superposées sur la face supérieure 37 de la plaquette 13. On pourrait aussi dire que la plaquette 13 dispose de deux rainures longitudinales de section rectangulaire 29, 31 pour le logement des couches, composites.

La figure 4c illustre la possibilité de rajouter une couche de décoration 41 par-dessus la plaquette 13. La couleur de cette couche de décoration 41 est par exemple la même que celle du flasque 17, afin d'obtenir une impression esthétique plaisante. Cette couche peut être prévue d'une épaisseur suffisante pour reprendre des efforts de collage et augmenter la tenue de celui-ci.

Les figures 5a et 5b montrent un exemple de liaison entre la plaquette 13 et les couches composites du rayon 7 qui diffère légèrement de celui des figures 4a à 4c. En effet, dans le cas des figures 5a et 5b, il est prévu une zone de transition 43 en matériau fondu entre la plaquette 13 et les couches en matériau composite. Cette zone de transition peut améliorer la liaison entre la plaquette 13 et les couches composites en réduisant le risque de détachement des couches de la plaquette.

La zone de transition 43 est obtenue par l'adjonction d'un jonc ou carré en matériau synthétique et notamment en matériau thermoplastique, tel que 45 dans l'interstice entre les couches 23, 25, 27 et la plaquette 13 avant le moulage. Le jonc 45 est fondu lors du moulage de l'ensemble rayon 7 et plaquette 13. La figure 5a montre le jonc 45 inséré avant le moulage, et la figure 5b montre le résultat obtenu après moulage. Alternativement, la figure 5c montre un mode de réalisation dans le quel la plaquette 13 présente elle-même une forme généralement parallépipédique munie de deux extrémités triangulaires formant lesdites zones de transition, qui dans ce cas ne fondent pas lors du moulage.

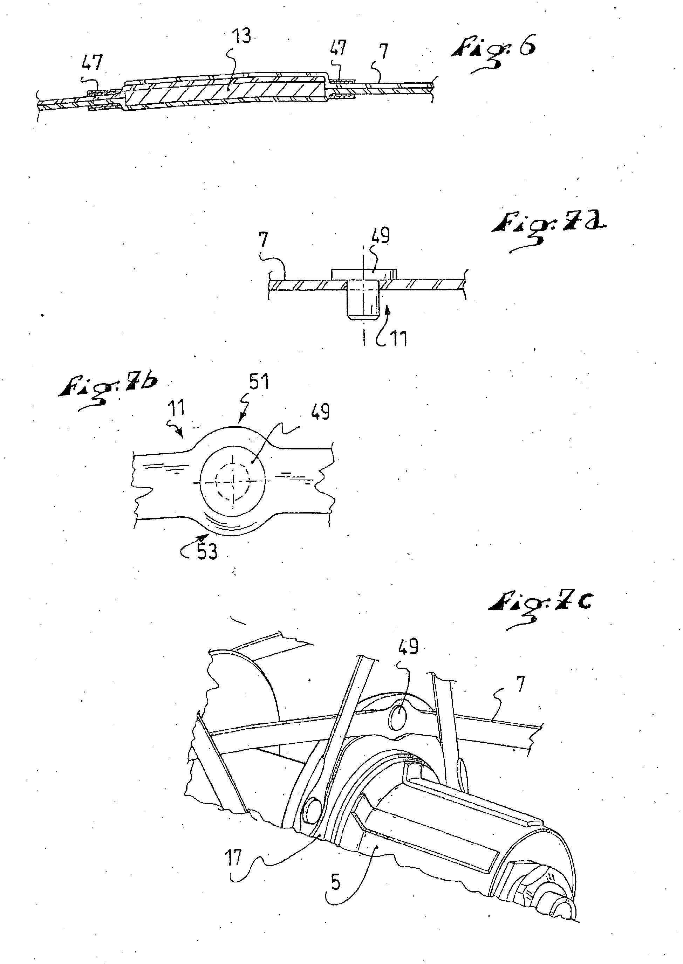

La figure 6 montre une possibilité d'amélioration du collage entre la plaquette 13 et le rayon 7. Cette amélioration se fait par des cerclages 47 en fibres de carbone unidirectionnelles enroulés à chaque extrémité de la plaquette 13.

Les figures 7a à 7c montrent une variante de moyen de fixation entre le moyeu 5 et le rayon 7. Dans cette variante, la liaison est assurée, non pas par une plaquette, mais par une goupille épaulée 49. La figure 7a est une section partielle longitudinale de la partie centrale 11 du rayon 7. La figure 7b est une vue de dessus de cette partie centrale 11. La figure 7c montre comment la goupille 49 permet l'accrochage réversible du rayon 7 au flasque 17 du moyeu 5.

Il convient de noter que la goupille 49 n'interrompt ou encore ne transperce pas les fibres de carbones s'étendant d'une extrémité à l'autre du rayon 7. En effet, lors du moulage de l'ensemble rayon et goupille, les fibres sont écartées et drapées autour de la goupille.

En référence à la figure 7b, on peut dire que la goupille 49 est insérée et maintenue entre deux surfaces externes longitudinales 51, 53 du rayon 7.

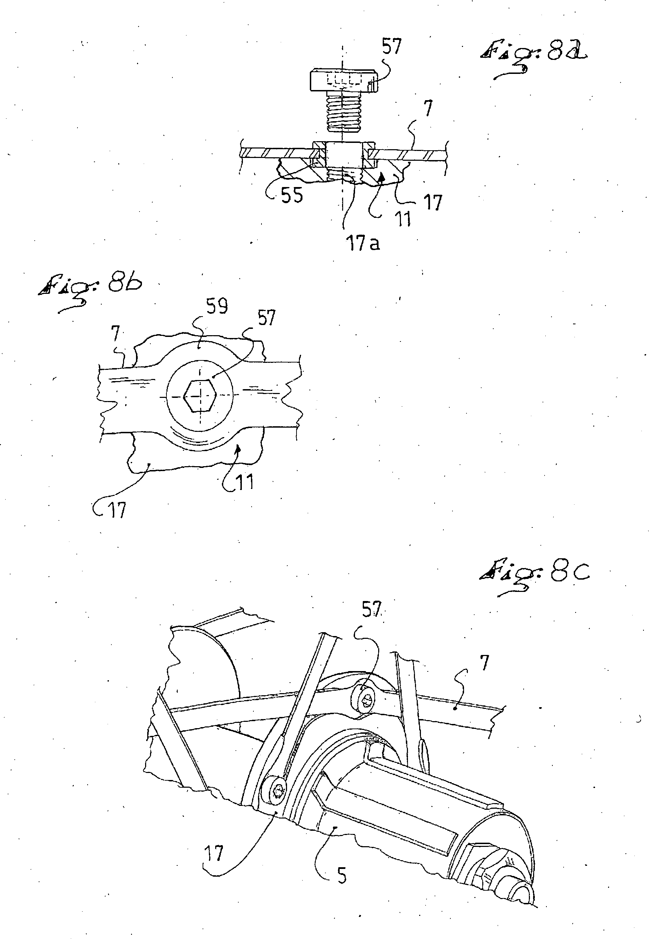

Les figures 8a à 8c montrent une autre variante de moyen de liaison entre le moyeu 5 et la partie centrale 11 du rayon 7. Le moyen de liaison est un bout de tube lisse 55 inséré dans le rayon de façon similaire à la goupille 49. La figure 8a est une section partielle longitudinale de la partie centrale 11 du rayon 7. La figure 8b est une vue de dessus de cette partie centrale 11. La figure 8a montre comment le tube 55 permet, par l'intermédiaire d'une vis 57, l'accrochage réversible par vissage du rayon 7 au flasque 17 du moyeu 5 qui présente un trou taraudé 17a. De même que pour la goupille 49, les fibres de carbone ne sont pas interrompues par le tube 55 mais drapées autour de celui-ci ce qui donne lieu à un renflement 59.

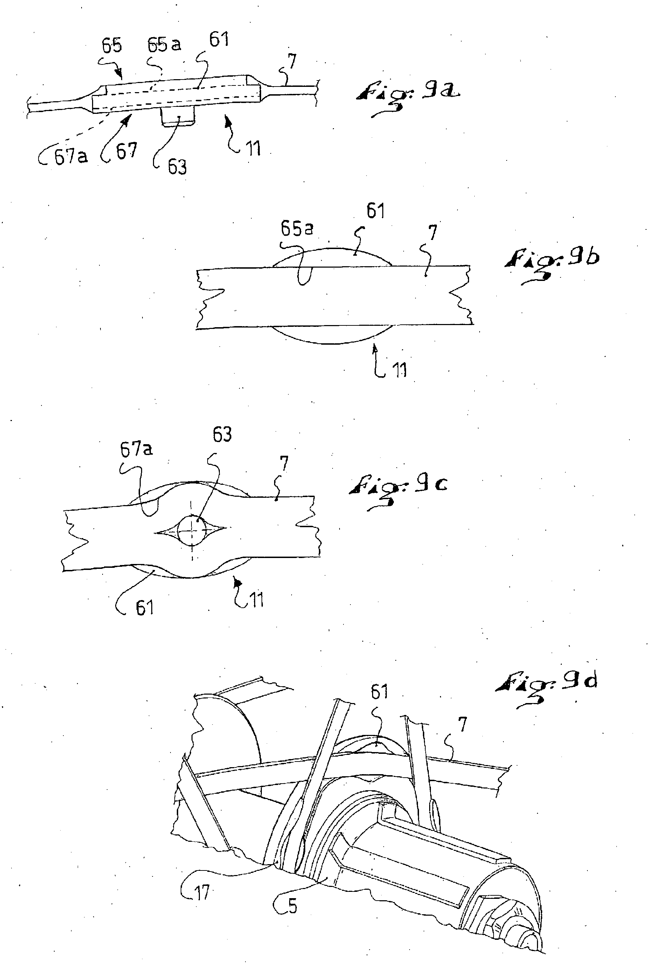

Finalement, les figures 9a à 9d montrent encore une autre variante du moyen de liaison. Cette fois, le moyen de liaison est une sorte de plaquette elliptique 61 avec un pion 63. La forme elliptique assure une grande surface de collage entre la plaquette 61 et le rayon 7. Le pion 63 permet la liaison avec le moyeu 5.

Les figures 9a à 9c sont, respectivement, une vue de côté, de dessus et de dessous de la partie centrale 11 du rayon 7. La figure 9d montre comment la plaquette 61 permet l'accrochage réversible du rayon 7 au flasque 17 du moyeu 5.

Aux figures 9a et 9b, on voit que la face supérieure 65 et la face inférieure 67 de la plaquette 61 sont munis de gorges longitudinales respectivement 65a, 67a pour le logement des couches composites, de façon similaire à la plaquette 13 des figures 4a à 4c. De façon similaire à la goupille 49 et au tube taraudé 55, les fibres de carbone sont drapées autour du pion 63 (cf. Fig. 9c).

Les figures 10 et 11 illustrent plus particulièrement le mode d'accrochage amovible ou liaison réversible des rayons 7 au niveau de la jante. La seule différence entre les deux modes de réalisation est que dans le cas de la figure 10 le rayon 7 est double, c'est-à-dire s'étend selon un diamètre de la roue, tandis que dans le cas de la figure 11 le rayon est simple.

Dans le cas de la figure 10, le rayon comporte donc deux dispositifs 70 de liaison réversible à la jante, à savoir un, à chaque extrémité, tandis que dans le cas de la figure 11, ce rayon ne comporte qu'un seul dispositif de liaison réversible 70 à la jante.

Dans les deux cas les fibres constituant chaque rayon sont disposées pour former une boucle 71 à chaque extrémité, destiné à être fixée à la jante, chaque boucle 71 étant monobloc avec le corps allongé du rayon 7.

Le rayon peut être réalisé par tout procédé connu, selon un certain nombre d'étapes. Par exemple il peut être prévu de bobiner une mèche multifilamentaire de fibres de carbone sèches, puis, de guider la mèche dans un bac pour être imprégnée d'une matière qui permet la cohésion des fibres. Il peut s'agir d'une résine thermodurcissable ou d'un autre matériau, comme une matière synthétique thermoformable. Ensuite la mèche imprégnée est bobinée en courroie. De préférence il est prévu de réaliser plusieurs tours de bobinage. Cela évite, ou réduit fortement, une discontinuité d'épaisseur du rayon 7. Il est d'ailleurs possible d'ajouter à la courroie constituant le rayon, des renforts localisés, pour ajuster l'épaisseur.

Bien entendu, les fibres sont orientées sensiblement selon la direction longitudinale L du rayon 7.

La courroie est alors placée dans un moule, pour être mise en forme et subir une élévation de température. A la sortie du moule le corps allongé du rayon 7 et les boucles 71 forment une pièce monobloc, dont la forme est stable. Cela signifie que la pièce ne se déforme pas sans sollicitation extérieure.

Bien entendu le procédé de fabrication du dispositif de liaison 70 peut comprendre d'autres étapes.

Le rayon 7 présente l'aspect général d'une barre, de section sensiblement rectangulaire, dont la largeur et l'épaisseur sont sensiblement constantes. Cependant il peut alternativement être prévu que la largeur varie, ou que l'épaisseur varie, par exemple pour conférer au rayon 7 des propriétés aérodynamiques. Ainsi la section du corps allongé du rayon 7 peut présenter toute forme comme celle d'un carré, d'un rectangle, d'un oblong, d'une ellipse, ou autre.

Selon l'invention, comme on le comprend à l'aide des figures 10 et 11, chaque dispositif de liaison 70 comprend un insert 72 logé dans une boucle 71, une tige 73 solidarisée à l'insert 72, la tige 73 étant orientée selon la direction longitudinale L, et définissant une première portion de vissage 74 de la tige. En l'occurrence, la portion de vissage 74 est réalisée sous la forme d'un filetage de l'extrémité de la tige 73.

La portion de vissage 74 est centrée dans l'insert 72, transversalement et dans le sens de l'épaisseur, afin de lui éviter toute flexion dommageable à sa résistance en traction.

La portion de vissage 74, ou vis, permet une transmission directe des efforts entre le rayon 7 et la jante 3. En effet, la vis 74 est vissée dans un écrou lui-même retenu à l'intérieur de la jante 1 (non représenté sur le dessin).

La première tige 73 est également, bien entendu, solidarisée à l'insert 72. Ce dernier s'étend transversalement entre deux faces latérales 72a. Ces faces 72a sont par exemple sensiblement planes, et orientées selon la direction longitudinale L. Entre les faces latérales 72a, l'insert 72 présente une face de liaison 72b. Cette dernière est incurvée. Elle vient en contact des fibres du rayon 7, pour donner à l'extrémité associée de celui-ci sa forme de boucle, dans le cas où l'insert 72 et la courroie sont placés simultanément dans le moule. A l'opposé de la face de liaison 72b, l'insert 72 présente une extrémité 72c plane et perpendiculaire à la direction longitudinale L du rayon. L'idée est ici de réduire autant que possible le volume de l'insert 72, pour réduire sa masse. Cela allège le dispositif de raccordement 70.

L'insert 72 constitue un assemblage en forme de goutte, l'assemblage épousant l'intérieur de la boucle de l'extrémité associée du rayon 7.

Selon la première forme de réalisation décrite, la tige 73 est solidarisée à l'insert 72 par vissage.

Afin d'équilibrer la répartition des efforts longitudinaux qui transitent par le dispositif de raccordement 70, la première tige 73 est sensiblement alignée avec un axe longitudinal central du rayon 7. C'est pourquoi la tige 73 est sensiblement à mi-chemin entre les faces latérales 72e de l'insert 72. De manière non limitative, la traversée de la boucle 71 par la tige 73 est permise par l'écartement des fibres la constituant au moment de la fabrication. En fait une autre étape du procédé de fabrication consiste à écarter les fibres et à faire passer la tige 73 dans la boucle 71 avant la mise en place, dans le moule, d'un ensemble comprenant le rayon 7, le premier insert 72 et la tige 73. Bien entendu, la tige peut être vissée dans l'insert, soit avant, soit après sa mise en place dans la boucle 71.

Le dispositif de liaison 13 est identique au dispositif précédemment décrit et ne sera pas décrit plus avant.

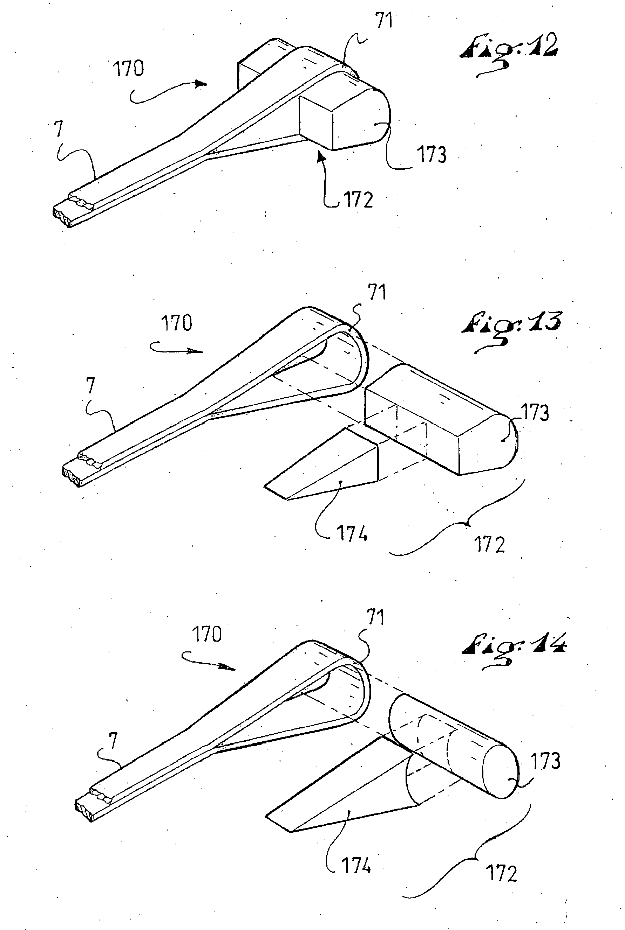

Les figures 12 à 16 illustrent d'autres modes de réalisation du dispositif de liaison réversible 170 au niveau de la boucle 71 du rayon, ne nécessitant pas vissage dans la jante. La seule différence par rapport aux modes de réalisation des figures 10 et 13 est que l'insert, ici appelé 172 fait saillie latéralement par rapport au corps du rayon 7 et la boucle 71 de celui-ci.

L'insert 172 a donc sensiblement la même forme de goutte que l'insert 72 mais présente de plus deux saillies latérales 173 ayant également une forme arrondie. Cet insert 172 peut être monobloc comme représenté sur la figure 12, ou être réalisé en plusieurs parties comme montré sur les figures 13 et 14.

Dans le cas de la figure 13 l'insert 172 comporte une première partie 173 de forme partiellement cylindrique et une partie 174 de forme sensiblement pyramidale destinée à combler l'espace entre la partie 173 et le reste de la boucle, ce qui permet de garantir un collage optimum.

Dans le cas de la figure 14, l'insert 172 comporte une première partie 173 de forme cylindrique et une seconde partie 174 de forme sensiblement pyramidale.

Les figures 15 et 16 illustrent la coopération de l'insert 172 avec la jante 3 dans le cas d'un rayon simple.

Dans ce cas, la jante 3 comporte, au niveau de l'accrochage de chaque rayon 7, un trou 3a dont la largeur en direction circonférentielle correspond à la largeur I du rayon. L'insert 172 est alors engagé de façon que ses saillies latérales 173 soient en appui sur le fond 3b de la jante réalisant ainsi l'accrochage amovible et démontable du rayon à la jante par venue en butée de l'insert 172 contre le fond de jante. Dans ce cas l'autre extrémité du rayon est munie d'un entrant ou insert fileté 72 tel que décrit en liaison avec les figures 10 et 11 et est donc fixé par vissage au niveau du moyeu.

Bien entendu l'invention n'est pas limitée aux formes de réalisation qui viennent d'être décrites, et comprend tous les équivalents techniques pouvant entrer dans la portée des revendications qui vont suivre.

## Revendications

1. Roue comportant une jante (3), un moyeu (5), au moins un rayon (7) reliant la jante au moyeu, le rayon étant en matériau composite, **caractérisée en ce que** chaque rayon (7) comprend un dispositif (13, 49, 55, 61) permettant une liaison réversible avec le moyeu (5) d'une roue (1), et **en ce que** ledit dispositif de liaison (13, 49, 55, 61) est incorporé au moins partiellement à l'intérieur du rayon (7) par surmoulage.

2. Roue selon la revendication 1, **caractérisée en ce que** le dispositif de liaison (13, 49, 55, 61) est inséré et maintenu entre deux surfaces externes longitudinales (33, 35 ; 51, 53) du rayon (7).

3. Roue selon la revendication 1 ou 2, **caractérisée en ce que** le dispositif de liaison est une plaquette (13, 61) insérée entre des couches composites (23, 25, 27) du rayon (7).

4. Roue selon la revendication 3, **caractérisée par** une superposition de deux couches composites (25, 27) sur une face (37, 65) de la plaquette (13, 61).

5. Roue selon la revendication 3 ou 4, **caractérisée en ce que** la plaquette (13, 61) comporte une gorge longitudinale (29, 31) pour le logement d'au moins une couche composite (23, 25, 27) du rayon (7).

6. Roue selon les revendications 4 et 5, **caractérisée en ce que** les deux couches composites superposées (25, 27) sont logées dans une première gorge (29) plus profonde de la plaquette (13, 61), une troisième couche composite (23) étant logée dans une seconde gorge (31) moins profonde.

7. Roue selon l'une quelconque des revendications 3 à 6, **caractérisée en ce que** les couches composites (23, 25, 27) à proximité de la plaquette (13, 61) sont entourées par un cerclage (47) afin d'éviter leur délaminage.

8. Roue selon l'une quelconque des revendications 3 à 7, **caractérisée par** une zone de transition (43) entre la plaquette (13, 61) et les couches composites (23, 25, 27).

9. Roue selon l'une quelconque des revendications 3 à 8, **caractérisée en ce que** la plaquette (13, 61) est soit plane ou bien comporte deux parties (19, 21), l'une étant inclinée d'un certain angle par rapport à l'autre.

10. Roue selon l'une quelconque des revendications 3 à 9, **caractérisée en ce que** la plaquette (61) a une forme elliptique et comporte un pion (63) pour assurer la liaison avec le moyeu (5).

11. Roue selon la revendication 1 ou 2, **caractérisée en ce que** le dispositif de liaison est une goupille épaulée (49).

12. Roue selon la revendication 1 ou 2, **caractérisée en ce que** le dispositif de liaison est un tube taraudé (55).

13. Roue selon l'une quelconque des revendications 10 à 12, **caractérisée en ce que** les fibres du matériau composite entourent le dispositif de liaison (49, 55, 61) de part et d'autre.

14. Roue selon l'une quelconque des revendications précédentes, **caractérisée en ce que** le dispositif de liaison (13, 49, 55, 61) présente une surface rugueuse, obtenue par exemple par sablage, pour l'amélioration de l'accroche entre le dispositif (13, 49, 55, 61) et le rayon (7).

15. Roue selon l'une quelconque des revendications précédentes, **caractérisée en ce que** la liaison réversible est obtenue par mise en butée d'un dispositif de liaison (13, 173) avec une partie associée (jante, moyeu) de la roue.

16. Rayon pour roué selon l'une quelconque des revendications précédentes.

17. Rayon selon la revendication 16, **caractérisé en ce qu'**il est double.
